Europäisches Patentamt

European Patent Office

Office européen des brevets

(19)

(11) Numéro de publication: **0 006 824**
**B1**

(12) **FASCICULE DE BREVET EUROPEEN**

(45) Date de publication du fascicule du brevet: **17.11.82**

(51) Int. Cl.³: **B 29 D 7/20**

(21) Numéro de dépôt: **79400461.4**

(22) Date de dépôt: **05.07.79**

(54) **Procédé et dispositif pour le nettoyage de feuilles de matières plastiques et feuilles ainsi nettoyées.**

(30) Priorité: **05.07.78 FR 7819982**

(43) Date de publication de la demande:
**09.01.80 Bulletin 80/1**

(45) Mention de la délivrance du brevet:
**17.11.82 Bulletin 82/46**

(84) Etats contractants désignés:
**AT BE CH DE FR GB IT LU NL SE**

(56) Documents cités:
**US - A - 3 060 482**
**US - A - 3 453 681**
**US - A - 3 546 733**

(73) Titulaire: **SAINT-GOBAIN INDUSTRIES**
**62, Bd Victor Hugo**
**F-92209 Neuilly sur Seine (FR)**

(72) Inventeur: **Nierlich, Jean**
**91 Rue du Colonel Fabien**
**I-92160 Antony (FR)**
Inventeur: **Lavoisey, Yves**
**38-40 Rue du Révérend Père Christian Gilbert**
**F-92600 Asnieres (FR)**

(74) Mandataire: **Eudes, Marcel et al,**
**Saint-Gobain Recherche 39 Quai Lucien Lefranc**
**F-93304 Aubervilliers Cedex (FR)**

Courier Press, Leamington Spa, England.

## Procédé et dispositif pour le nettoyage de feuilles de matières plastiques et feuilles ainsi nettoyées

La présente invention concerne le nettoyage de feuilles ou de films, de longueur finie ou indéfinie, formée d'une ou plusieurs couches de matières plastiques et notamment des feuilles transparentes ou translucides présentant de bonnes propriété optiques pouvant être utilisées dans la fabrication d'un vitrage feuilleté.

L'invention concerne plus particulièrement un nouveau procédé et un nouveau dispositif de nettoyage des feuilles sus-dites.

Les vitrages feuilletés, très répandus actuellement, que ce soit dans l'industrie du bâtiment, des transports, en lunetterie, etc. sont généralement formés à partir de plusieurs feuilles de verre et/ou de matières plastiques rigides entre lesquelles sont collées des feuilles intercalaires, par exemple des feuilles de poly-vinylbutyral. Récemment, il est apparu de nouveaux vitrages feuilletés perfectionnés comportant, en plus des éléments déjà décrits, une feuille de matières plastiques possédant de bonnes propriétés d'antilacération et de cicatrisation. Cette feuille est orientée, par exemple dans le cas d'un parebrise d'automobile, vers l'intérieur de l'habitacle, de façon à protéger les occupants du véhicule des éclats de verre provoqués par un bris accidentel du pare-brise.

Pour que les vitrages soient conformes à certaines normes de sécurité, par exemple dans le cas de vitrages automobiles, ils doivent posséder de très bonnes qualités optiques. C'est pourquoi leur fabrication nécessite des conditions de propreté particulières afin d'éviter toute souillure due par exemple à des grains de poussière qui, présents dans le vitrage, créeraient des défauts optiques sous forme de distorsions et/ou de lentilles par exemple.

Lorsque la feuille de matières plastiques, composant d'un vitrage feuilleté, est un poly-vinylbutyral ou plus généralement en matière thermoplastique, les poussières fines existant éventuellement à la surface de la feuille sont invisibles car elles se noient dans la couche du thermoplastique lors de l'assemblage du vitrage feuilleté.

Par contre, lorsqu'on utilise des feuilles dont une face est formée d'une matière thermodurcissable, comme c'est le cas dans le vitrage de sécurité préalablement cité, les grains de poussière ne se noient pas dans la matière thermodurcissable à l'assemblage du vitrage et peuvent provoquer les défauts optiques déjà mentionnés. En outre, même lorsque la feuille de matières plastiques présente une face formée essentiellement d'un couche très mince d'un thermoplastique, les grains de poussière n'ont plus la possibilité de se noyer et occasionnent les défauts mentionnés.

Il est donc très important que la feuille de matières plastiques utilisée dans la fabrication d'un vitrage feuilleté soit parfaitement propre et exempte de particules, notamment lorsque la feuille est d'un des types précités.

Il est déjà connu de nettoyer des feuilles en matières plastiques lar l'utilisation d'un dispositif combinant les actions d'une brosse à poils souples, de buses d'aspiration et d'éléments antistatiques qui ont pour fonction de neutraliser les charges électriques environnant la feuille dans la zone de nettoyage. Cette neutralisation des charges électriques est essentielle pour éviter le dépôt de poussières ou autres particules, au cours du nettoyage, sur la feuille qui est en un matériau plastique généralement très sensible aux phénomènes électrostatiques.

Un tel dispositif n'est pas entièrement satisfaisant; d'une manière générale, des particules et notamment les très petites, risquent de s'écouler entre les poils de la brosse, et moins encore lorsqu'il est utilisé pour nettoyer une feuille comportant une face comprenant essentiellement une matière thermoplastique en couche mince, par exemple une couche de colle. Dans ce cas, des particules incluses partiellement dans cette couche ne sont pas éliminées.

Pour obvier aux inconvénients cités, l'invention propose un nouveau nettoyage des feuilles de matières plastiques, qui peut leur être appliqué à différents stades de la fabrication des vitrages feuilletés. On applique généralement ce nettoyage à la feuille juste avant assemblage avec les autres composants du feuilleté. On peut ainsi l'appliquer juste après la fabrication de la feuille par extrusion ou par coulée sur un support et/ou avant stockage si elle n'est pas utilisée tout de suite. On peut encore lui appliquer plusieurs fois ce nettoyage à des stades différents. Ainsi, avantageusement, on procède à un premier nettoyage juste après la fabrication de la feuille et avant stockage le cas échéant, suivi d'un second nettoyage juste avant l'assemblage du feuilleté.

Le nouveau nettoyage agit avec efficacité contre toutes sortes de particules de poussières, quelles que soient leur nature et leurs dimensions, celles-ci pouvant être inférieures à un micron Le nettoyage fournit une feuille exempte de toutes particules et poussières visibles et cela sans altérer la feuille par formation d'éraflures ou de rayures, par exemple, pouvant occasionner des défauts optiques.

L'invention propose un nouveau procédé perfectionné pour nettoyer une feuille de longueur finie ou indéfinie de matières plastiques, pendant un déplacement continu et relatif de cette feuille.

Le nouveau procédé comprend en combinaison des opérations d'essuyage d'au moins une des deux faces de la feuille, d'aspiration des particules libérées, de décharge de l'électricité statique de la feuille. Il se caractérise en ce qu'il comprend en outre au moins une opération de reclage d'au moins une des faces de la feuille, sur toute sa largeur par au moins un contact suivant une ligne.

L'essuyage des faces de la feuille élimine des poussières ou particules qui s'y étaient déposées et qui y adhèrent légèrement. Il agit notamment avec efficacité sur des particules microscopiques, sur des poils très fins, etc.

Le reclage est nécessaire car il répond au moins à deux objectifs. D'une part, il agit comme une ou plusieurs barrières continues contre les particules et les poussières présentes sur une ou les deux faces de la feuille, et d'autre part il détache de la couche de matériau plastique les particules qui y sont légèrement incrustées. Le raclage peut encore se traduire par un cisaillement des extrémités émergentes de particules fortement incrustées dans la couche de matériau plastique. Le reclage peut être "statique" ou "dynamique" comme il sera explicité par la suite.

L'aspiration retire de la surface de la feuille les particules et les poussières essuyées et raclées et elle empêche leur dépôt en d'autres endroits.

De préférence, on aspire directement les particules en même temps que l'on essuie et que l'on racle.

Le déchargement de l'électricité statique de la feuille empêche le dépôt de nouvelles particules ou poussières sur celle-ci. Le déchargement peut s'effectuer par exemple en ionisant l'air autour de la feuille dans toute la zone de nettoyage.

Pour éliminer toutes les particules, on effectue, avantageusement, plusieurs essuyages et plusieurs raclages consécutifs, avec, de préférence, un essuyage à la suite du dernier raclage.

Avantageusement, les différentes opérations de nettoyage s'appliquent sur une face de la feuille ou les deux selon la nature des couches extérieures et comprennent la séquence suivante:

— on essuie une première fois en même temps que l'on aspire, on racle une ou plusieurs fois tout en aspirant les particules libérées, on essuie une dernière fois, le déchargement de l'électricité statique de la feuille étant maintenu durant toutes ces opérations.

On peut cependant commencer le nettoyage par un premier raclage, l'ordre des opérations pouvant dépendre de la nature de la feuille.

L'invention concerne également un nouveau dispositif pour le nettoyage de feuilles de longueur finie ou indéfinie de matières plastiques. Le nouveau dispositif peut être monté, par exemple, dans une ligne d'assemblage de vitrages feuilletés.

Le nouveau dispositif comprend un convoyeur pour le transport de la feuille à nettoyer, un bâti qui, de part et d'autre du convoyeur, supporte: des moyens pour décharger la feuille de son électricité statique, des moyens pour essuyer une face de la fauille ou les deux, des moyens pour racler une face de la feuille ou les deux, des moyens pour aspirer les particules essuyées et raclées, lesdits moyens s'étendant sur toute la largeur du convoyeur.

Les moyens pour décharger la feuille de son électricité statique peuvent être des éléments antistatiques qui ionisent l'atmosphère autour de la feuille, par exemple des barres métalliques munies d'une pluralité de pointes métalliques, qui peuvent être alimentées par une tension électrique de fort voltage ou encore reliées à la terre, qui sont placées à des distances de l'ordre de quelques centimètres de la feuille et au-dessus et/ou en dessous d'elle et qui s'étendent sur toute sa largeur.

Les moyens pour essuyer la feuille, sur ses deux côtés, peuvent être des éléments formés de plaquettes qui s'étendent sur toute la largeur de la feuille, recouvertes sur la face au contact de la feuille d'un papier ou d'un tissu de types variables, à condition toutefois qu'ils ne peluchent pas. On utilise par exemple un papier non tissé, notamment un papier commercialisé sous l'appellation Vileda. On peut également utiliser séparément ou en combinaison des tissus en matière synthétique, par exemple des polyamides. Dans ce cas, de préférence, on utilise un type de velours de Nylon qui présente des poils inclinés que l'on oriente face au défilement de la feuille, de sorte que les poils retiennent efficacement les poussières et autres particules. Les éléments en plaquettes sont avantageusement reliés par des conduits à une source d'aspiration qui aide à retenir les particules sur le papier ou entre les poils du tissu et qui évite ainsi leur dépôt sur un autre endroit de la feuille.

Les moyens pour racler la feuille peuvent comprendre, au-dessus et/ou en dessous du passage de la feuille, un ou plusieurs ensembles munis d'au moins une lame rigide et résistant à l'usure. Selon la nature des matériaux formant les faces de la feuille, d'une part, et selon son utilisation d'autre part, on utilise telles espèces de lame ou telles autres. Ainsi pour racler une face formée essentiellement d'un matériau thermoplastique, on utilise, de préférence, des lames en acier inoxydable, de quelques centièmes à quelques dixièmes de millimètres d'épaisseur. On utilise ces mêmes lames en acier inoxydable pour racler les faces, formées essentiellement d'un matériau thermoplastique ou thermodurcissable, d'une feuille de laquelle il n'est pas exigé des propriétés optiques exceptionnelles. Par contre, si cette exigence existe et lorsque la feuille présente une face formée essentiellement d'un matériau thermodurcissable, on utilise des lames qui n'ont pas d'action abrasive vis-à-vis de cette face, qui ne la rayent pas.

Pour racler la face supérieure de la feuille, la ou les lames sont disposées parallèlement à la feuille, perpendiculairement au sens de défilement du convoyeur et à niveau légèrement inférieur à celui de la face raclée supérieure de la feuille en position de nettoyage, de façon à venir s'appuyer sur elle pour la racler. Pour racler, éventuellement, la face inférieure de la feuille, la ou les lames sont disposées de façon analogue, symétriquement, pour venir s'appuyer sur cette face inférieure.

Advantageusement, pour améliorer le raclage, on dispose les lames à l'aplomb ou au voisinage immédiat de rouleaux recouverts d'un papier ou d'un tissu en velours de Nylon par exemple, de façon que la feuille passe entre les rouleaux et les lames. Les lames raclent la feuille sur toute sa largeur et elles retiennent les poussières qui s'étaient déposées sur la ou les faces. Avantageusement, les moyens pour racler la feuille comprennent des buses d'aspiration, s'étendant sur toute la longueur des lames disposées à leur proximité et en amont par rapport au sens du défilement de la feuille, qui aspirent les particules et poussières délogées de la couche et retenues par les lames.

De préférence, pour obtenir un bon raclage en tout point de la largeur de la feuille, les lames sont montées légèrement inclinées par rapport à la verticale et dans le sens du défilement du transporteur. On augmente ainsi leur souplesse vis-à-vis de la face raclée de la feuille et elles peuvent alors suivre les fluctuations éventuelles de niveau de la face raclée qui sont dues à un manque d'uniformité d'épaisseur ou à une tension différente de la feuille.

Ces ensembles à lame fixe procurent un raclage statique en retiennent les particules qui sont déposées à la surface de la feuille. Ils peuvent, également, éliminer certaines particules légèrement incrustées dans les couches extérieures de la feuille. Pour améliorer cette dernière action, il est cependant préférable d'effectuer des passages répétés des lames sur ces particules et d'utiliser par exemple des éléments comprenant une ou plusieurs lames mobiles. Ces éléments procurent un raclage dynamique. Ainsi, avantageusement, le dispositif de nettoyage comprend un ou plusieurs tambours rotatifs d'axe parallèle à la feuille, à la périphérie desquels sont montées une série de lames.

La distance du ou des tambours à la feuille est fixée de façon que les lames viennent à son contact, plus ou moins prononcé selon la nature de la couche raclée. L'adjonction d'un tel tambour à lames aux ensembles à lame fixe améliore grandement l'efficacité du nettoyage en éliminant totalement les particules ens surface et aussi celles qui sont partiellement incrustées dans une couche extérieure de la feuille. Le tambour à lames peut encore agir comme un rasoir en coupant les extrémités émergentes de particules fortement incrustées dans cette couche extérieure. Grâce à l'action répétée des lames, l'élimination de ces particules s'effectue sand qu'il y ait une action d'appui trop importante des lames sur la feuille, ce qui risquerait de la détériorer, en formant des rayures, par exemple.

Avantageusement, le dispositif comprend d'un côté de la feuille ou des deux, au moins un élément à lame fixe et au moins un élément à lame mobile.

On peut également adjoindre aux ensembles à lame fixe un ou plusieurs éléments équipés d'une ou de plusieurs lames parallèles vibrantes, montées perpendiculairement au sens du défilement de la feuille et qui sont animées d'un mouvement de va-et-vient. Cet élément à lames vibrantes agit de façon très efficace sur les particules incrustées partiellement dans une couche extérieure de la feuille.

Le dispositif selon l'invention est particulièrement efficace car il procure une feuille pratiquement exempte de poussières ou particules. Cependant, pour améliorer encore cette efficacité et pour maintenir la feuille dans son état de propreté, il est particulièrement intéressant de placer le dispositif dans un local contenant une atmosphère filtrée. Ainsi, avantageusement, on place le dispositif dans un local à parois filtrantes, par exemple des parois en fibres de verre textile permettant de filtrer les poussières et particules en les empêchant de pénétrer lorsqu'elles ont des dimensions supérieures à 0,3 $\mu$m environ, par exemple. De plus, il est avantageux d'établir une surpression dans le local, par exemple de l'ordre de quelques millimètres de mercure, de façon à préserver son atmosphère de l'extérieur. On peut encore améliorer l'isolation du dispositif contre les poussières ou d'autres agents de pollution en le plaçant dans une enceinte qui est elle-même située dans un local filtrant.

Le nettoyage de la feuille s'effectue généralement dans une atmosphère à environ 60% d'humidité relative et à une température ambiante de l'ordre de 20°C à 25°C. Une atmosphère trop chargée en humidité risque d'être néfaste vis-à-vis des éléments du dispositif qui peuvent s'oxyder. A l'opposé, une atmosphère trop sèche peut augmenter la faculté qu'a la feuille de se charger en électricité statique, ce qui provoque l'attraction d'un plus grand nombre de poussières et de particules.

Lors du nettoyage, la température de la feuille est d'environ 20 à 40°C. Une température trop basse de la feuille peut, dans certains cas, influer défavorablement sur ses propriétés mécaniques, en les réduisant, et par là rendre la feuille plus sensible vis-à-vis des éléments actifs du dispositif, par exemple la rendre plus facilement rayable. A l'opposé, si on applique le nettoyage à une feuille chauffée par exemple à environ 60°C, et lorsque cette feuille a une face comprenant une matière thermoplastique ayant des propriétés d'adhésion à température élevée, dans ce cas, ladite face thermoplastique retient plus fortement les poussières et particules.

D'autres caractéristiques et avantages de l'invention apparaîtront dans le description suivante d'un exemple de réalisation du dispositif.

La figure 1 est une schéma de l'ensemble du dispositif de nettoyage de la feuille de matières plastiques dans une vue en élévation;

La figure 2 est le dispositif en vue en plan;

Les figures 3 et 4 représentent un élément utilisé pour l'essuyage de la feuille;

Les figures 5 et 6 représentent un morceau du tissu en velours de nylon à poils orientés;

Les figures 7, 8 et 9 représentent un élément à lame fixe pour le raclage;

Les figures 10 et 11 représentent un élément à lames rotatives;

Les figures 12 et 13 sont des schémas d'un élément à lames vibrantes.

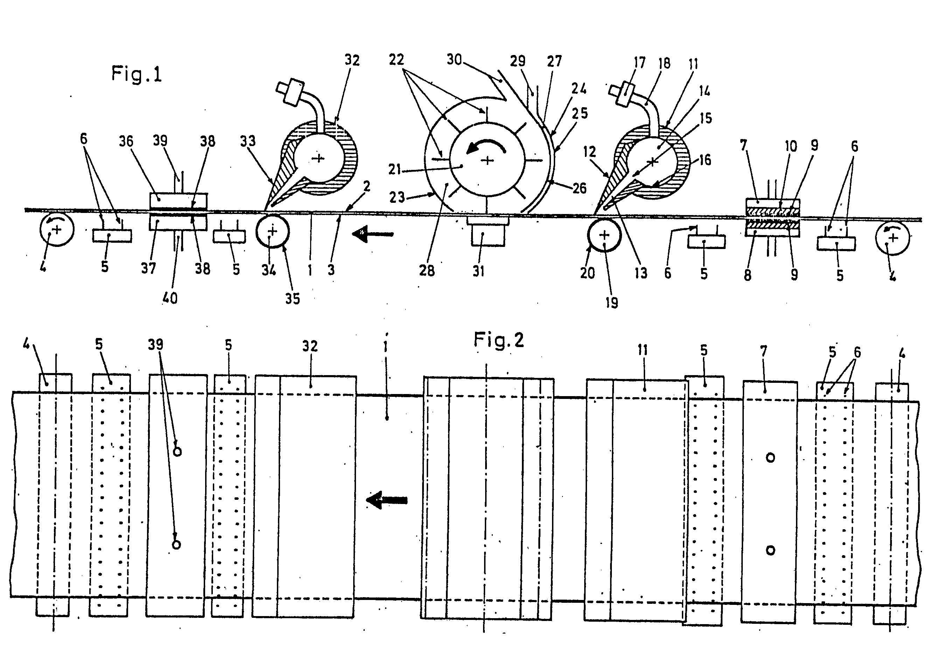

Les figures 1 et 2 sont des schémas d'une réalisation du dispositif qui est utilisée pour le nettoyage d'une feuille 1 de longueur indéfinie de matières plastiques qui présente une face supérieure 2 comprenant essentiellement une matière thermoplastique, par exemple un polyuréthane thermoplastique qui a des propriétés d'adhésion mais qui n'est pas collant à température ambiante, et une face inférieure 3 comprenant essentiellement une matière thermodurcissable, par exemple un polyuréthane thermodurcissable qui présente des propriétés de cicatrisation et d'antilacération, par exemple le polyuréthane décrit dans la publication du brevet français 2 251 608. Une telle feuille est utilisée, par exemple, comme couche superficielle d'un pare-brise de véhicule, et elle est décrite dans le brevet belge 856 398.

Dans cet exemple, le dispositif est placé au début d'une chaîne d'assemblage des vitrages feuilletés, dans un local parfaitement isolé de toute source de poussières et autres particules polluantes et dont l'atmosphère est à environ 20°C et a une humidité relative d'environ 60%. Pour ce faire, les parois du local sont fabriquées à partir de fibres de verre textile, par exemple des panneaux commercialisés sous l'appellation FILTRE ABSOLU par la Société SOFILTRA. On utilise ici des panneaux filtrants interdisant le passage de toutes les particules de dimensions supérieures à 0,3 $\mu$m.

La feuille, prise à température ambiante, se déplace sur un convoyeur comprenant des rouleaux 4 parfaitement lisses ou recouverts d'un tissu du type velours de Nylon, déjà cité, pour éviter toute altération mécanique de la surface du thermodurcissable.

La feuille provient, par exemple, d'un rouleau, forme sous laquelle elle a été entreposée entre le moment de sa fabrication et le moment de son utilisation.

Sous la feuille et à une distance de quelques centimètres de celle-ci, le dispositif présente une première barre métallique antistatique 5 équipée d'un nombre important, de l'ordre d'une centaine, de pointes métalliques 6. La barre est alimentée par une tension électrique du plusieurs milliers de volts. On utilise par exemple des barres antistatiques commercialisées par la Société française SIMCO sous la référence P-SH et qui sont alimentées par une tension électrique de 8000 volts en courants continu. En aval de la barre antistatique, deux plaquettes 7 et 8 situées de part et d'autre de la feuille 1, à son contact, s'étendent sur toute sa largeur. Les deux plaquettes sont recouvertes sur leur face au contact de la feuille d'un papier 9 non tissé Vileda. On utilise, par exemple, le papier commercialisé sous l'appellation Vileda Kuch référence 315 003 par la Société française JULLIARD. Le papier Vileda recouvre un matériau 10 suffisamment souple qui est, de préférence poreux pour qu'une aspiration puisse se faire à travers lui. Les plaquettes seront décrites de façon détaillée par la suite. Le papier Vileda retient les particules et poussières très fines, de dimensions souvent inférieures à un micron, les poils fins, etc.

En aval des plaquettes, le dispositif présente une deuxième barre antistatique 5, analogue à la première, disposée comme elle, à faible distance de la feuille. Les barres antistatiques peuvent être disposées au-dessus ou en dessous de la feuille, ou encore des deux côtés.

Plus loin, le dispositif comprend un premier ensemble à lame fixe. Cet ensemble est formé essentiellement d'un cylindre creux 11 sur lequel est fixé une lame métallique 12, de préférence en acier inoxydable, d'environ 15 centièmes de millimètre d'épasseur, qui s'étend sur toute la largeur de la feuille, et d'une buse d'aspiration 13 à fente mince, de longueur égale à celle de la lame et située à son amont. La fente de la buse débouche dans l'alésage 14 du cylindre 11 à un niveau 15 supérieur au point le plus bas 16 de l'alésage, Les extrémités de l'alésage 14 sont reliées à une source d'aspiration qui peut être commune à tous les éléments aspirants. La dépression créée est de l'ordre de 120 millimètres de mercure. L'ensemble à lame fixe est monté sur des paliers de façon que la lame soit en appui sur la feuille. La force d'appui peut être réglée à partir de contrepoids 17 coulissant sur les tiges 18. Cette force est, par exemple, de l'ordre de 1—2 newtons par centimètre linéaire. La lame est inclinée d'une dizaine de degrés environ vers le sens du défilement de la feuille pour être plus souple vis-à-vis des fluctuations d'épasseur de la feuille. L'ensemble est situé au-dessus et de préférence, pour des raisons citées par la suite, légèrement en aval d'un rouleau 19 qui peut être un de ceux du convoyeur et qui, avantageusement, pour nettoyer la face thermodurcissable, est recouvert d'un tissu nettoyant 20, par exemple de velours de Nylon comme précisé par la suite.

En aval de l'ensemble à lame fixe, le dispositif comprend un tambour cylindrique 21 sur lequel est montée une pluralité de lames métalliques 22, par exemple, une dizaine de lames souples en acier inoxydable. En fonctionnement, le tambour est animé d'un mouvement de rotation. Il est monté de façon que les lames viennent au contact de la surface supérieure de la feuille et appuient sur elle avec une force d'environ 1—2 newtons par centimètre linéaire. Le tambour est entouré d'une enveloppe en tôle 23, dont la partie amont 24 est formée de deux épaisseurs de tôle 25 et 26, de façon à former une fente 27. Cette fente ainsi que la cavité 28 comprise entre l'enveloppe 23 et le tambour 21 sont reliées par des conduits 29 et 30 à une source d'aspiration. Le tambour est monté au-dessus d'une tablette flottante 31.

En aval du tambour à lames, le dispositif comprend un deuxième ensemble 32 à lame fixe qui peut être identique au premier. De préférence, la lame 33 a une épaisseur plus faible et d'environ 5 centièmes de millimètre. Dans cette forme préférée, le premier ensemble, à lame fixe plus rigide, a pour rôle d'éliminer, ou tout au moins de fragiliser, les particules, légèrement incrustées dans la couche du thermoplastique, alors que le deuxième ensemble, à lame moins rigide pour obtenir un raclage plus fin, a une fonction de finition. Le deuxième ensemble à lame fixe est également positionné, approximativement, à l'aplomb d'un rouleau 34 recouvert de velours de Nylon 35.

En aval, le dispositif comprend encore une troisième barre antistatique 5 suivie d'un deuxième ensemble pour l'essuyage, avec deux plaquettes 36 et 37 qui s'étendent de part et d'autre de l'épasseur de la feuille, sur toute sa largeur, et qui sont recouvertes face à la feuille d'un tissu 38 en velours de Nylon. On utilise par exemple le tissu commercialisé sous l'appellation Velours de Nylon qualité 66008 noir 450 par la Société allemande NIEDICK A.G. Des buses d'aspiration 39 et 40 sont montées au dos des plaquettes de façon que les poils du velours de Nylon, orientés vers l'amont, retiennent plus efficacement toutes les dernières particules et poussières qui ont pu échapper aux éléments précédents du dispositif. Les poils du velours de Nylon pénètrent dans toutes les aspérités présentées par la feuille. Le rôle du velours de Nylon est particulièrement important dans le nettoyage d'une feuille continue formée d'une succession de feuilles de longueur finie, jointes entre elles par un ruban adhésif. Dans ce cas, la feuille peut présenter, au niveau des joints, un rebord dû à la surépaisseur du raban adhésif. Des poussières et particules viennent se loger dans ces rebords, surtout lors de leur passage sous les lames reclantes. Les poils du velours de Nylon, qui suivent toutes les fluctuations en épaisseur de la feuille viennent déloger ces particules. Un papier non tissé du type Vileda ne pourrait remplir correctement cette fonction, d'autant qu'un tel papier, qui s'use en risquant de libérer des particules, doit être de préférence utilisé au début du nettoyage.

Le dispositif comprend encore une barre antistatique 5 analogue à la précédente, qui ionise l'air autour de la feuille. Le nombre de barres antistatiques utilisées dans le dispositif n'est pas limitatif, mais il est recommandé de positionner ces barres au voisinage immédiat des éléments du dispositif qui exercent un frottement sur la feuille et qui risquent de la charger en électricité statique. Il est généralement nécessaire qu'une barre antistatique soit disposée en aval du dernier de ces éléments.

Tous les éléments de nettoyage ainsi que les barres antistatiques s'étendent sur toute la largeur du dispositif et reposent par leurs extrémités sur un bâti non représenté.

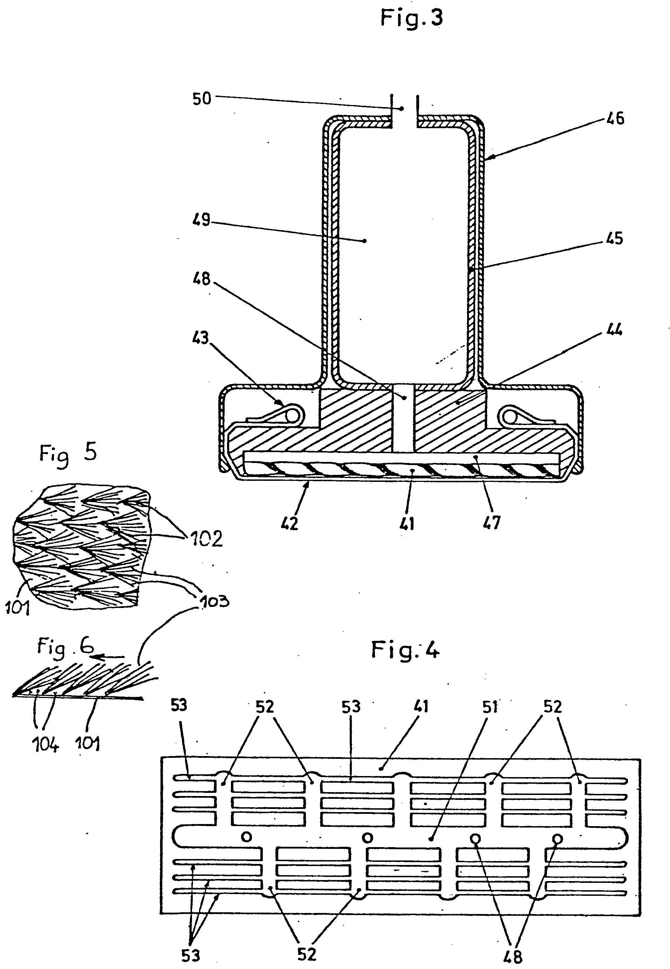

La figure 3 représente un des éléments d'essuyage pouvant être monté indifféremment des deux côtés de la feuille. Cet élément s'étend sur toute la largeur du dispositif et il comprend une plaque 41 recouverte sur sa partie inférieure par du papier Vileda ou du velours de Nylon 42 selon le cas. Le papier ou le tissu est maintenu tendu sous la plaque par des tiges 43 fixées à un support de plaques 44. Le support de plaque est lui-même fixé sur un profilé 45 dont les deux extrémités reposent sur le bâti du dispositif. Une enveloppe en tôle 46 entoure le support de plaque et le profilé. La surface agissante du papier ou du velours de Nylon peut avoir une largeur de l'ordre de 20 centimètres environ.

Lorsque l'élément d'essuyage comprend une aspiration, celle-ci doit s'exercer au niveau du papier ou du tissue d'essuyage, au travers de la plaque. C'est pourquoi cette plaque 41 peut être, comme représenté sur la figure, une plaque en matériau poreux tel qu'une mousse. Dans ce cas, entre la plaque 41 et le support 44 de plaque, on prévoit un espace 47 dans lequel s'exerce la dépression, ledit espace étant relié par des conduits 48 à la partie intérieure 49 du profilé, lui-même relié à une source d'aspiration par les conduits 50. On peut également utiliser une plaque d'un matériau non poreux et qui est percée de trous répartis sur toute la surface au contact du tissu ou du papier d'essuyage, ou encore, comme le montre la figure 4, une plaque 41 en caoutchouc par exemple qui présente, sur la surface au contact du tissu ou du papier, de nombreuses rainures à partir desquelles se fait l'aspiration.

La figure 4 représente une telle plaque 41, dans une vue en plan du côté à recouvrir par le papier ou le tissu. Ce côté présente une rainure principale 51 reliée par les conduits 48 à une source de vide. De part et d'autre de la rainure principale, des rainures secondaires 52 sont prolongées par des rainures tertiaires 53 plus étroites. De cette façon, l'aspiration peut se faire sur toute la surface de la plaque et la dépression créée est sensiblement constante sur toute la surface active de la plaque.

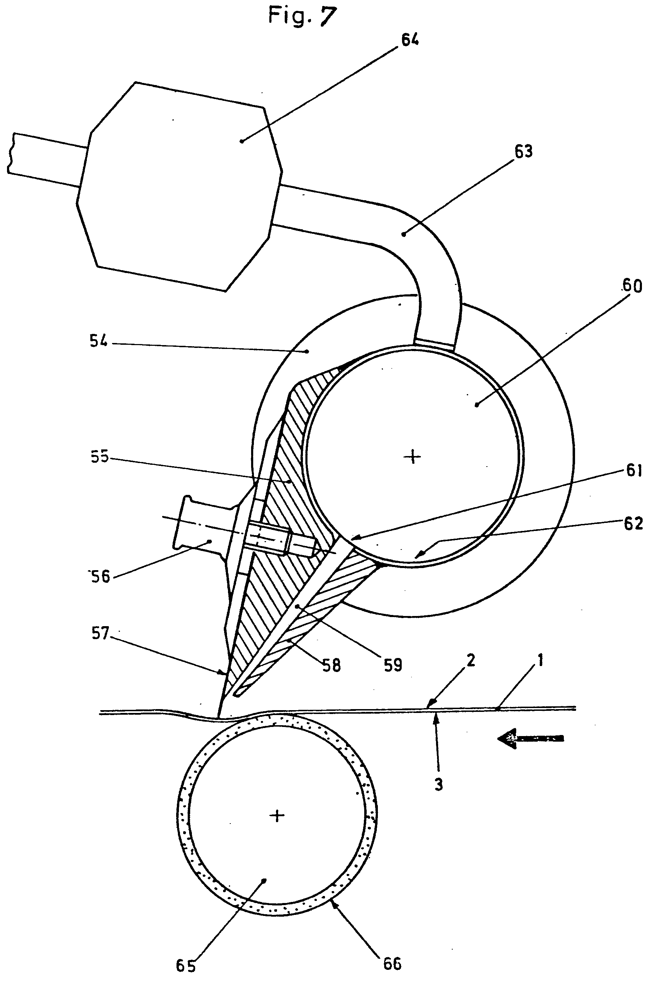

Les figures 5 et 6 représentent, en vue de dessus et de profile respectivement, un échantillon du velours de Nylon que l'on utilise avantageusement. Ce velours de Nylon est formé d'un support tissé 101 sur lequel sont fixées de très nombreuses petites touffes 102 comprenant chacune une trentaine environ de poils 103 très fins de 2—3 millimètres de long. Les touffes sont disposées en quinconce et à des distances de l'ordre de 2 millimètres l'une de l'autre environ. Les poils sont inclinés essentiellement dans un même sens. Lors du montage des éléments en plaquettes recouverts à l'aide de ce tissu, on dispose ces éléments de façon que les poils soient orientés dans le sens opposé au sens de défilement de la feuille, comme représenté par le flèche.

De cette façon, lors du nettoyage, les particules et poussières 104 présentes sur la feuille sont retenues par les poils et emprisonnées dans les touffes.

Les figures 7, 8, 9 représentent un élément à lame fixe utilisé pour le raclage de la surface de la feuille comprenant essentiellement un thermoplastique.

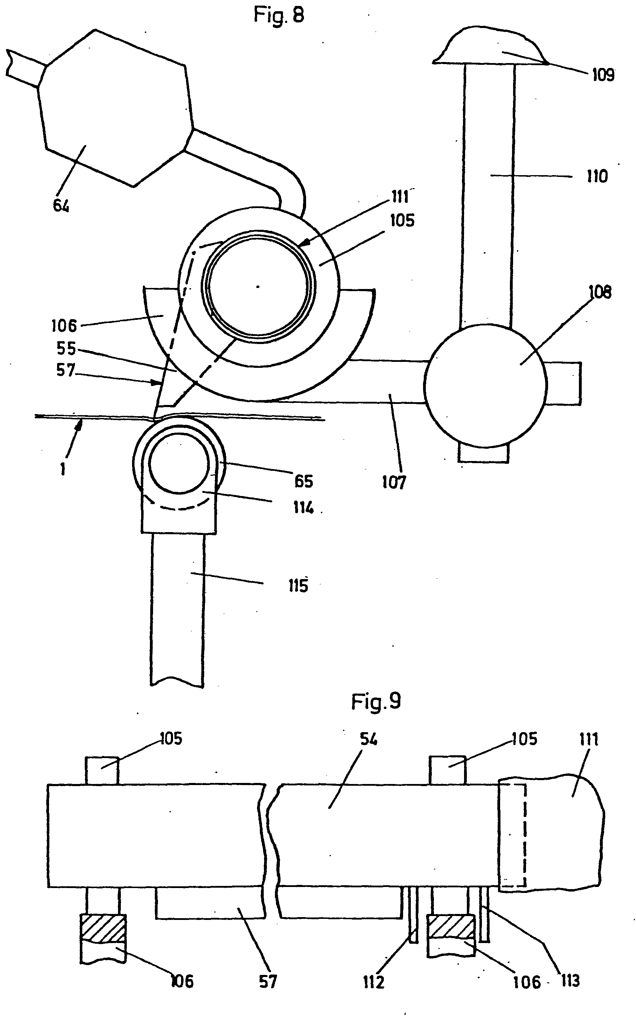

Cet élément est représenté dans les figures 7 et 8 en position de raclage, au-dessus de la feuille 1; la figure 9 est une vue en travers. L'élément comprend un cylindre creux 54 qui s'étend sur toute la largeur du dispositif et qui repose à chacune de ses extrémités, par l'intermédiaire de roulements à aiguilles 105 par exemple, sur un berceau 106 relié par une tige 107 sensiblement horizontale à une noix 108 qui est elle-même reliée à la partie haute du bâti 109 par une tige 110 sensiblement verticale. Le système tiges-noix permet de régler la position de l'élément dans le dispositif. Sur le cylindre 54 est fixé un support de lame 55 qui agit comme raidisseur et qui maintient, à l'aide de vis 56, par exemple, une lame 57 dans une position légèrement inclinée par rapport à la verticale. La lame non biseautée, de section constante peut avoir une épaisseur de l'ordre de quelques centièmes jusqu'à quelques dixièmes de millimètre, épaisseur qui peut varier selon la position de l'élément dans le dispositif et aussi selon la matière dont elle est constituée. Du côté du support de lame 55, un plat métallique 58 est fixé au cylindre et forme avec le support de lame 55 une fente 59 qui débouche dans l'alésage 60 du cylindre à un niveau 61 supérieur au point bas 62 de l'alésage, de façon que les poussières ou particules aspirées 104 ne retombent pas sur la feuille. L'aspiration peut s'effectuer par une dex extrémités de l'alésage grâce à une gaine d'aspiration 111 reliée à une source de vide. Le cylindre est surmonté par une ou plusieurs tiges 63 sur lesquelles peuvent se déplacer un ou plusieurs contrepoids 64 qui permettent de régler avec précision l'effort exercé sur la feuille par la lame métallique, effort qui peut être de l'ordre de quelques newtons par centimètre linéaire. Deux plats 112 et 113 fixés au cylindre 54 maintiennent le dispositif dans sa position transversale.

En position de raclage, la lame est légèrement décalée vers l'aval d'un rouleau 65 qui est soutenu et guidé en rotation, à chacune de ses extrémités, dans un palier 114 monté sur une tige 115 fixée à la partie basse du dispositif par exemple. La position de la lame en aval du rouleau présente plusieurs avantages par rapport à une position à l'aplomb du rouleau. D'une part un augmente ainsi la souplesse de la lame vis-à-vis de la feuille à nettoyer. D'autre part, on diminue le risque d'abîmer la feuille, de la couper ou tout au moins de la marquer lors d'une fausse manoeuvre, ou d'un changement de la vitesse, ou de la force de traction de la feuille. Le rouleau 65 peut être recouvert de velours de Nylon 66. Il joue alors un double rôle; en plus de son action de support, il permet un nettoyage simultané de la face inférieure 3 de la feuille.

On peut utiliser l'ensemble à lame décrit ci-dessus pour le raclage de la face thermodurcissable de la feuille, à condition toutefois et de préférence, de substituer à la lame métallique une lame moins dure en matière synthétique qui ne risque pas de rayer ou d'abraser la face du polyuréthane thermodurcissable déjà cité.

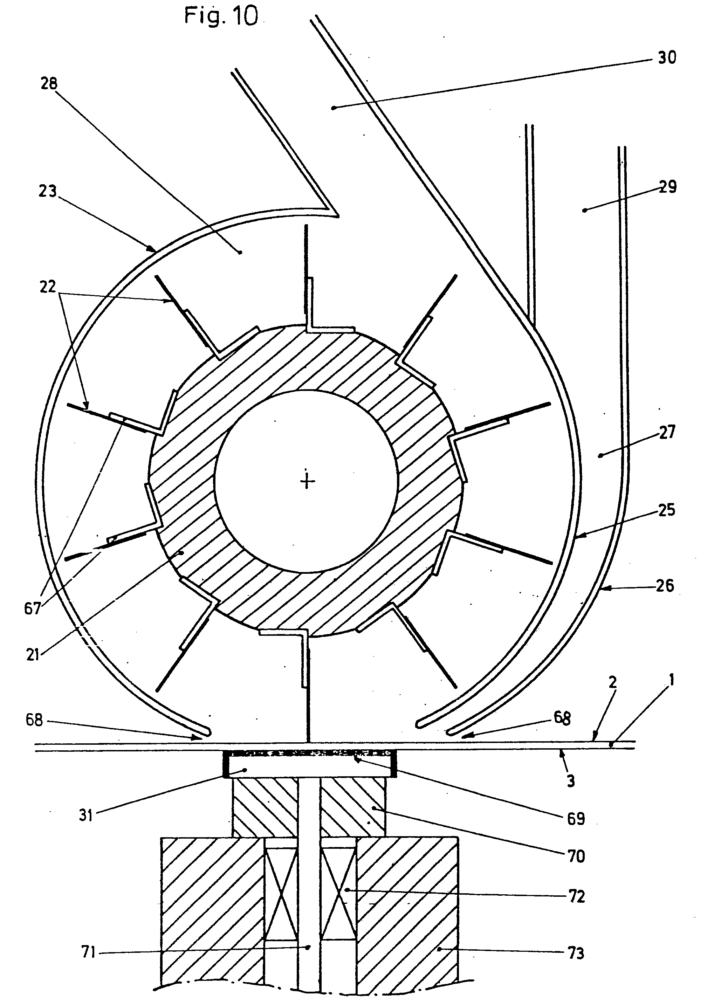

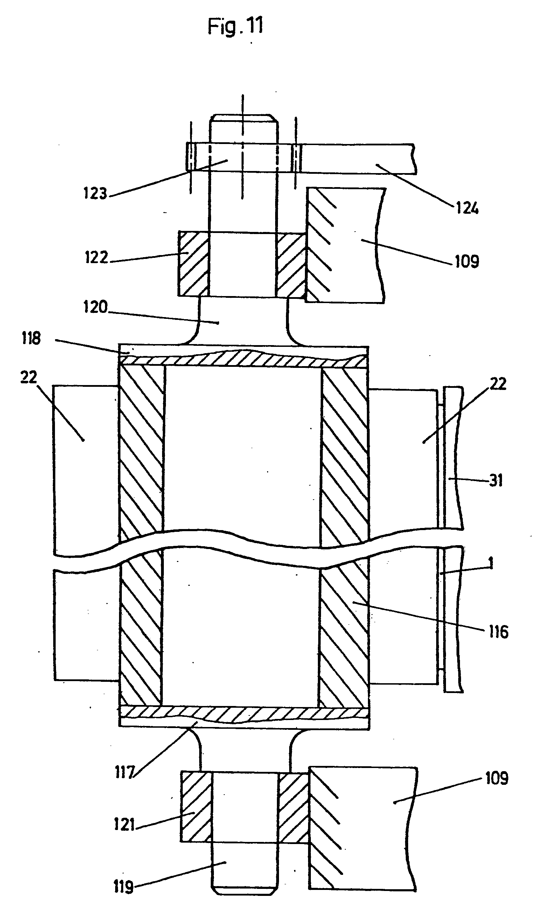

Les figures 10 et 11 représentent un élément à tambour rotatif. La figure 10 représente cet élément en position de raclage au-dessus de la feuille 1. Cet élément comprend un tambour 21, qui s'étend sur toute la largeur du dispositif. Des équerres 67 fixées par des vis à la périphérie du tambour portent des lames 22, de préférence en acier inoxydable, de quelques dixièmes de millimètre d'épasseur. Pour éviter la projection de particules sur des régions voisines de la zone raclée de la feuille d'une part, et par souci de sécurité d'autre part, une enveloppe en tôle 23 entoure le tambour. Dans sa partie amont l'enveloppe est formée de deux tôles 25 et 26 de façon à créer une fente 27 sur toute la largeur du dispositif. Des conduits d'aspiration 30 relient la cavité 28 comprise entre le tambour et l'enveloppe de tôle à une source d'aspiration. D'autres conduits d'aspiration 29 surmontent la fente 27. En position de travail, les extrémités inférieures 68 de l'enveloppe sont situées à faible distance de la feuille. Le tambour est monté à l'aplomb d'une tablette flottante horizontale 31. La tablette flottante en acier inoxydable, recouverte de velours de Nylon 69 par exemple, repose sur un élément amortisseur 70 en caoutchouc par exemple, et elle est fixée sur la tête d'un ou plusieurs axes verticaux 71 guidés lar l'intermédiaire de douilles à billes 72 dans le bâti 73 du dispositif.

L'élément à tambour rotatif peut être équipé d'une dizaine de lames par exemple. Le diamètre aux extrémités des lames est de l'ordre de vingt centimètres.

Le tambour est animé d'un mouvement de rotation, généralement dans le sens contraire au défilement de la feuille à racler. La vitesse de rotation peut varier selon le raclage à effectuer. Par exemple, on peut faire tourner le tambour à une vitesse de 10 tours par seconde. Par une rotation plus rapide on crée une auto-aspiration qui peut dans certains cas permettre de supprimer l'aspiration connexe.

Le dispositif de commande du mouvement de rotation du tambour peut être manuel ou automatique. On utilise par exemple un moteur électrique.

La figure 11 représente dans une coupe axiale l'élément à tambour rotatif sans l'enveloppe. Le tambour 21 est formé d'un corps cylindrique creux 116 qui porte les équerres non représentées supportant les lames métalliques 22. Sur les extrémités du corps cylindrique sont fixées deux plaques métalliques rondes 117 et 118 prolongées chacune par un demi-arbre 119 et 120. Ces deux demi-arbres sont supportés par deux paliers à billes 121 et 122, eux-mêmes montés sur le bâti 109 du dispositif. Un pignon d'engrenage 123, solidaire du demi-arbre 120 s'engrène avec une roue dentée 124 qui, entraînée par une manivelle non représentée, par exemple, transmet par l'intermédiaire du pignon 123 un mouvement de rotation au tambour et aux lames.

On peut également monter l'élément à tambour rotatif sur un système amortisseur.

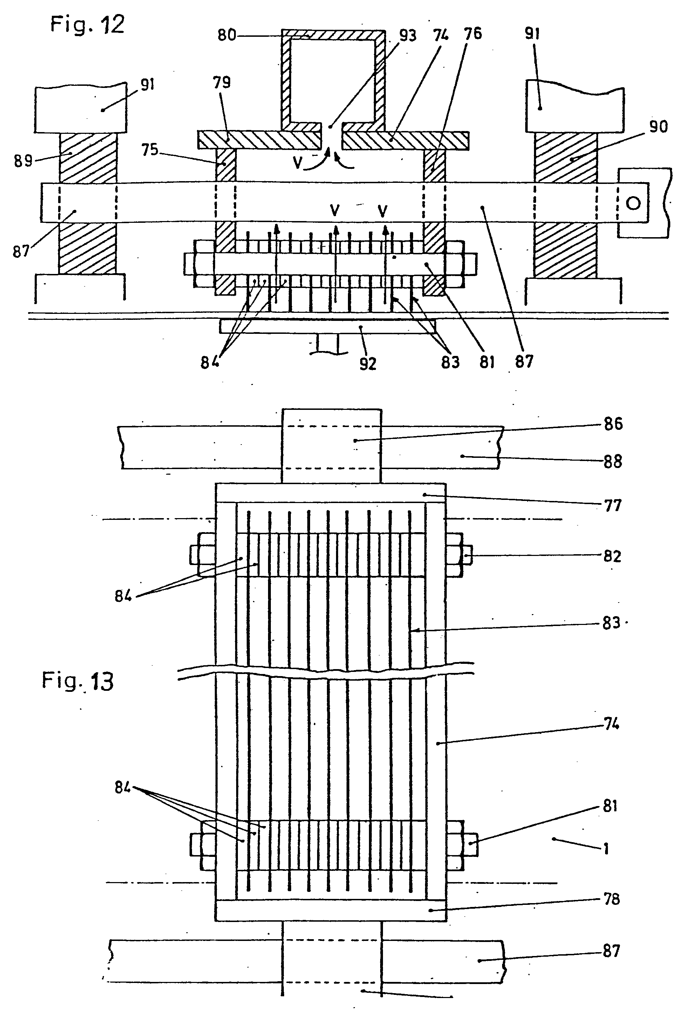

Les figures 12 et 13 représentent un élément à lames mobiles qui peut être utilisé, dans une variante du dispositif, en remplacement du tambour rotatif à lames précédemment décrit. Cet élément est animé d'un mouvement de va-et-vient dans la direction du déplacement de la feuille. Il comprend un corps métallique 74, s'étendant sur toute la largeur du dispositif, formé de quatre plats verticaux 75, 76, 77, 78 surmontés d'un fond 79 fixé lui-même à un profilé 80 relié par ses extrémités à une source d'aspiration. Les deux plats verticaux 75 et 76 sont traversés par deux axes horizontaux 81 et 82 supportant les lames métalliques 83 parallèles, séparées les unes des autres par des rondelles 84 métalliques pour les espacer d'environ 5 millimètres. Les lames 83, au nombre d'une vingtaine par exemple, s'étendent sur toute la largeur de l'élément. Elles sont de préférence en acier inoxydable, de quelques centièmes de millimètre d'épaisseur. De part et d'autre du corps 74, des oreilles 85 et 86 rapportées sur les plats sont traversées par des tiges horizontales 87 et 88 qui coulissent dans des paliers 89 et 90 montés sur le bâti 91 du dispositif et qui assurent le guidage de l'élément dans le mouvement de va-et-vient. Les tiges 87 et 88 sont encore reliées à un dispositif moteur qui procure le mouvement alternatif. Le dispositif moteur peut être par exemple un dispositif animé par un moteur électrique et comprenant un système de transmission avec beilles et excentrique de façon à transformer un mouvement de rotation en mouvement rectiligne de va-et-vient.

L'élément vibrant est avantageusement monté à l'aplomb d'une tablette flottante 92 horizontale du type déjà décrit précédemment.

Lors du nettoyage de la feuille 1 virtualisée sur la figure 8, l'élément est animé d'un mouvement de va-et-vient avec une fréquence qui peut être de l'ordre de 10 allers-retours par seconde. L'aspiration des particules raclées s'effectue entre les lames suivant les flèches V et par des ouvertures 93 entre le fond 79 et la profilé 80.

L'efficacité de l'élément à lames vibrantes décrit ci-dessus est comparable à celle du tambour rotatif à lames. Cependant, en procurant un raclage de sens constant, l'emploi du tambour paraît plus avantageux, présentant moins de risques de détérioration de la feuille que l'emploi de lames vibrantes qui subissent un rénversement de leur inclinaison à chacun de leurs va-et-vient.

De plus, l'emploi du tambour présente l'avantage de ne pas provoquer des vibrations susceptibles de se transmettre aux autres éléments du dispositif.

Dans l'exemple de réalisation décrit ci-dessus, le dispositif ne comporte pas d'éléments de raclage pour la face inférieure qui est en polyuréthane thermodurcissable. Ces éléments ne sont pas exclus pour autant, à condition toutefois qu'ils n'altèrent pas la surface du matériau.

D'autres combinaisons dans lesquelles l'ordre des éléments de nettoyage et/ou leur nombre sont modifiés restent conformes au dispositif de l'invention.

On peut, par exemple, placer le tambour rotatif à lames en amont des éléments à lame fixe et même en amont des éléments d'essuyage. On peut encore placer un élément à lame fixe en aval du dernier élément d'essuyage équipé généralement d'un tissu qui ne peluche pas du type velours de Nylon.

Dans une variante du dispositif, on adjoint un élément à tambour rotatif à un élément à lames vibrantes.

Le dispositif de l'invention peut être utilisé pour le nettoyage de feuilles de dimensions très variables. Il est parfaitement efficace lorsque la feuille est animée d'un mouvement d'avance de l'ordre de quelques mètres par minute. Dans ce cas, une surface de feuille correspondant approximativement au format d'un vitrage feuilleté et qui est couverte d'environ 60 particules avant le nettoyage, ce qui est courant, se trouve après l'utilisation du dispositif presque absolument et même absolument exempte de particules observables.

## Revendications

1. Procédé pour le nettoyage d'une feuille de matières plastiques, pendant un déplacement continu et relatif de cette feuille, comprenant les opérations suivantes:

— on décharge le feuille de son électricité statiques;
— on essuie au moins une des deux faces de la feuille;
— on aspire les particules ou poussières qui ont été libérées, caractérisé en ce qu'en plus de l'essuyage on racle au moins une des deux faces sur toute la largeur de la feuille par au moins un contact suivant une ligne.

2. Procédé selon la revendication 1, caractérisé en ce qu'on décharge la feuille de son électricité statique, durant toutes les opérations d'essuyage et de raclage, par ionisation de l'air autour de la feuille.

3. Procédé selon une des revendications 1 ou 2, caractérisé en ce qu'on aspire les particules et poussières en même temps que l'on essuie et que l'on racle.

4. Procédé selon une des revendications 1 à 3, caractérisé en ce que les opérations de nettoyage comprennent la séquence suivante:

— on essuie une première fois, en même temps que l'on aspire les particules et poussières libérées;
— on racle, au moins une fois, au moins une des deux faces, en même temps que l'on aspire les particules et poussières libérées;
— on essuie une dernière fois, en même temps que l'on aspire les particules et poussières libérées, le déchargement de l'électricité statique de la feuille étant maintenu durant toutes ces opérations.

5. Procédé selon une des revendications 1 à 3, caractérisé en ce que l'on racle plusieurs fois une face au moins de la feuille en combinant un raclage statique à l'aide d'au moins une lame fixe par rapport à la feuille qui se déplace avec un raclage dynamique à l'aide d'au moins une lame mobile le long de la direction du déplacement de la feuille.

6. Procédé selon une des revendications 1 à 5, caractérisé en ce qu'il s'applique à une feuille transparente ou translucide de matières plastiques présentant de hautes qualités optiques dont une face comprend essentiellement une matière thermoplastique alors que l'autre face comprend essentiellement une matière thermodurcissable.

7. Procédé selon la revendication 6, caractérisé en ce que l'opération de raclage s'effectue uniquement sur la face comprenant essentiellement une matière thermoplastique.

8. Procédé selon une des revendications 1 à 7, caractérisé en ce qu'il s'applique à une feuille dont la température est de 20 à 40° environ.

9. Dispositif pour le nettoyage d'une feuille (1) de matières plastiques, pendant un déplacement continu et relatif de cette feuille, comprenant:

— un convoyeur (14) pour le transport de la feuille à nettoyer;
— des moyens (5) pour décharger la feuille de son électricité statique;
— des moyens (7, 8, 36, 37) pour essuyer au moins une face de la feuille;
— des moyens (13, 39) pour aspirer les particules et poussières libérées pour les éliminer de la feuille;

caractérisé en ce qu'il comprend des moyens (21, 32) pour racler au moins une face de la feuille, ces moyens définissant au moins un contact suivant une ligne avec la feuille à nettoyer et s'étendant sur toute la largeur de cette feuille.

10. Dispositif selon la revendication 9, caractérisé en ce que les moyens pour décharger la feuille de son électricité statique sont des barres antistatiques (5).

11. Dispositif selon l'une des revendications 9 ou 10, caractérisé en ce que les moyens pour essuuyer la feuille sont équipés d'un papier non tissé (9).

12. Dispositif selon la revendication 11, caractérisé en ce que le papier non tissé (9) est du Vileda.

13. Dispositif selon une des revendications 9 à 10, caractérisé en ce que les moyens pour essuyer la feuille comprennent un tissu non pelucheux (38).

14. Dispositif selon la revendication 13, caractérisé en ce que le tissue non pelucheux (38) est du velours de Nylon à poils orientés.

15. Dispositif selon la revendication 14, caractérisé en ce que le velours de Nylon est monté de façon à présenter ses poils (103) orientés dans le sens contraire au défilement de la feuille.

16. Dispositif selon une des revendications 9 à 15, caractérisé en ce qu'il comprend des moyens pour essuyer équipés d'un papier non tissé (9) et des moyens pour essuyer équipés d'un tissu non pelucheux (38).

17. Dispositif selon la revendication 16, caractérisé en ce qu'il comprend des moyens pour essuyer équipés de Vileda et des moyens pour essuyer équipés de velours de Nylon, le dernier moyen pour essuyer étant équipé de velours de Nylon.

18. Dispositif selon une des revendications 9 à 17, caractérisé en ce que les moyens pour racler (32) comprennent une lame fixe, de préférence en acier inoxydable.

19. Dispositif selon une des revendications 9 à 18, caractérisé en ce que les moyens pour racler (21) comprennent au moins une lame mobile.

20. Dispositif selon la revendication 19, caractérisé en ce que les moyens pour racler à lames mobiles sont essentiellement un tambour rotatif (21) équipé sur sa périphérie de plusieurs lames (22).

21. Dispositif selon l'une des revendications 19 ou 20, caractérisé en ce que les lames (22) sont en acier inoxydable, et que leur section est constante.

22. Dispositif selon l'une des revendications 19 ou 21, caractérisé en ce que les moyens pour racler à lame mobile comprennent au moins un élément vibrant équipé d'au moins une lame (83) provoquant un mouvement de va et vient à ladite lame ou auxdites lames dans la direction du déplacement de la feuille à nettoyer.

23. Dispositif selon une des revendications 9 à 22, caractérisé en ce qu'il comprend des moyens pour racler de deux types: à lame fixe et à lame mobile.

24. Dispositif selon une des revendications 9 à 23, caractérisé en ce que chacun des moyens pour racler est relié à une source d'aspiration pour les particules et poussières libérées.

25. Dispositif selon la revendication 24, caractérisé en ce que les moyens pour racler à lame fixe présentent en amont de la lame (57) une buse d'aspiration (59) qui débouche dans un alésage (60) à un niveau supérieur (61) au niveau le plus bas (62) dudit alésage, de façon que les particules aspirées ne retombent pas sur la feuille raclée.

26. Dispositif selon une des revendications 9 à 25, caractérisé en ce que chacun des moyens pour essuyer est équipé d'une buse d'aspiration pour les particules et poussières libérées.

27. Dispositif selon une des revendications 9 à 26, caractérisé en ce qu'il comprend des barres antistatiques (5) et, dans l'ordre, d'au moins un côté de la feuille suivant le sens du défilement de la feuille, des moyens d'essuyage (7, 8), des moyens de raclage (21, 32), des moyens d'essuyage (36, 37) équipés de velours de Nylon, une barre antistatique (5).

28. Dispositif selon la revendication 27, caractérise en ce que les moyens de raclage sont, dans l'ordre, d'au moins un côté de la feuille et suivant le sens de défilement de la feuille: un élément à lame fixe (11), un élément à lames mobiles (21, 74), un deuxième élément à lame fixe (32), d'épaisseur de lame plus faible que celle du premier élément.

29. Dispositif selon une des revendications 9 à 28, caractérisé en ce que les lames fixes (12, 33) sont inclinées vers l'aval dudit dispositif.

30. Dispositif selon une des revendications 9 à 29, caractérisé en ce qu'il est situé dans un local à parois filtrantes.

31. Dispositif selon une des revendications 9 à 30, caractérisé en ce qu'il est situé dans un local dans lequel l'atmosphère est en surpression.

32. Dispositif selon une des revendications 9 à 31, caractérisé en ce qu'il est situé dans un local duquel la température est d'environ 20—25°C.

33. Dispositif selon une des revendications 9 à 32, caractérisé en ce qu'il est situé dans un local dans lequel l'humidité relative de l'air est d'environ 60%.

34. Dispositif selon une des revendications 9 à 33, caractérisé en ce qu'il est placé juste à l'amont de la zone d'assemblage de vitrages feuilletés.

**Patentansprüche**

1. Verfahren zur Reinigung einer Folie aus Kunststoffmaterial während einer dauernden Verschiebung der Folie mit folgenden Verfahrensschritten:

— Entladen der Folie von ihrer statischen Elektrizität,
— Abwischen wenigstens einer der beiden Seiten der Folie,
— Absaugen von freigesetzten Partikeln oder Staubteilchen,

dadurch gekennzeichnet, daß zusätzlich zum Abwischen wenigstens eine der beiden Seiten auf der ganzen Folienbreite durch wenigstens eine Berührung längs in einer Linie abgerieben wird.

2. Verfahren nach Anspruch 1, dadurch gekennzeichnet, daß die Folie von ihrer statischen Elektrizität während des gesamten Abwisch- und Abreibvorganges durch Ionisation der um die Folie befindlichen Luft entladen wird.

3. Verfahren nach Anspruch 1 oder 2, dadurch gekennzeichnet, daß die Partikel und Staubteilchen gleichzeitig mit dem Abwischen und Abreiben abgesaugt werden.

4. Verfahren nach einem der Ansprüche 1 bis 3, dadurch gekennzeichnet, daß die Reinigungsvorgänge in folgender Reihenfolge durchgeführt werden:

— ein erstmaliges Abwischen zu der Zeit, in der die freigesetzten Partikel und Staubteilchen abgesaugt werden,
— ein wenigstens einmaliges Abreiben wenigstens einer der beiden Seiten gleichzeitig mit dem Absaugen der freigesetzten Partikel und Staubteilchen,
— ein letztmaliges Abwischen gleichzeitig mit dem Absaugen der freigesetzten Partikel und Staubteilchen, wobei das Entladen der Folie von der statischen Elektrizität während aller dieser Vorgänge aufrechterhalten wird.

5. Verfahren nach einem der Ansprüche 1 bis 3, dadurch gekennzeichnet, daß wenigstens eine der Seiten der Folie mehrfach abgerieben wird, indem man ein statisches Abreiben mit Hilfe wenigstens eines festen Abstreifers in Vorschubrichtung der Folie mit einem dynamischen Abreiben mit Hilfe wenigstens eines längs der Bewegungsrichtung der Folie beweglichen Abstreifers kombiniert.

6. Verfahren nach einem der Ansprüche 1 bis 5, gekennzeichnet durch seine Anwendung, daß auf eine durchsichtige oder durchscheinende Folie Kunststoff mit guter optischer Qualität, deren eine Seite hauptsächlich aus thermoplastischem Material und deren andere Seite hauptsächlich aus duroplastischem Material besteht.

7. Verfahren nach Anspruch 6, dadurch gekennzeichnet, daß der Abrebevorgang nur auf der aus thermoplastischem Material bestehenden Seite durchgeführt wird.

8. Verfahren nach einem der Ansprüche 1 bis 7, gekennzeichnet durch seine Anwendung auf eine Folie, deren Temperatur ca. 20° bis 40°C beträgt.

9. Vorrichtung zur Reinigung einer Folie (1) aus Kunststoffmaterial während einer kontinuierlichen Relativ-Verschiebung der Folie mit

— einem Förderband (14) zum Transport der zu reinigenden Folie,
— Einrichtungen (5) zum Entladen der Folie von ihrer statischen Elektrizität,
— Einrichtungen (7, 8, 36, 37) zum Abwischen wenigstens einer Seite der Folie,
— Einrichtungen (13, 39) zum Absaugen von freigesetzten Partikeln und Staubteilchen zur Entfernung derselben von der Folie

gekennzeichnet durch Einrichtungen (21, 32) zum Abreiben wenigstens einer Seite der Folie, die wenigstens eine Berührung entlang einer Linie mit der zu reinigenden Folie definieren und sich über die ganze Breite der Folie erstreckt.

10. Vorrichtung nach Anspruch 9, dadurch gekennzeichnet, daß die Einrichtungen zum Entladen der Folie von ihrer statischen Elektrizität antistatische Schienen (5) sind.

11. Vorrichtung nach einem der Ansprüch 9 oder 10, dadurch gekennzeichnet, daß die Einrichtungen zum Abwischen der Folie mit einem Papiervlies ausgerüstet sind.

12. Vorrichtung nach Anspruch 11, dadurch gekennzeichnet, daß das Papiervlies (8) "Vileda" ist.

13. Vorrichtung nach einem der Ansprüche 9 bis 10, dadurch gekennzeichnet, daß die Einrichtungen zum Abwischen der Folie ein nicht faserndes Tuch (38) aufweisen.

14. Vorrichtung nach Anspruch 13, dadurch gekennzeichnet, daß das nichtfasernde Tuch (38) aus Nylonsamt mit gerichtetem Flor besteht.

15. Vorrichtung nach Anspruch 14, dadurch gekennzeichnet, daß der Nylonsamt so angebracht ist, daß sein Flor (103) dem Folienlauf entgegengerichtet ist.

16. Vorrichtung nach einem der Ansprüche 9 bis 15, dadurch gekennzeichnet, daß mit einem Papiervlies (9) ausgerüstet Einrichtungen zum Abwischen und mit einem nichtfasernden Tuch (38) ausgerüstet Einrichtungen zum Abwischen vorgesehen sind.

17. Vorrichtung nach Anspruch 16, dadurch gekennzeichnet, daß sie aus mit "Vileda" versehenen Einrichtungen zum Abwischen und mit Nylonsamt ausgerüstete Einrichtungen zum Abwischen aufweist, wobei die letzte Einrichtung zum Abwischen aus Nylonsamt besteht.

18. Vorrichtung nach einem der Ansprüche 9 bis 17, dadurch gekennzeichnet, daß die Einrichtungen zum Abreiben (32) eine feststehende Klinge, vorzugsweise aus rostfreiem Stahl, aufweisen.

19. Vorrichtung nach einem der Ansprüche 9 bis 18, dadurch gekennzeichnet, daß die Einrichtung zum Abreiben (21) wenigstens eine bewegliche Klinge aufweist.

20. Vorrichtung nach Anspruch 19, dadurch gekennzeichnet, daß die aus beweglichen Klingen bestehenden Vorrichtungen zum Abreiben im wesentlichen eine Drehtrommel (21) sind, die auf ihrem Umfang mit mehreren Klingen (22) ausgerüstet ist.

21. Vorrichtung nach einem der Ansprüche 19 oder 20, dadurch gekennzeichnet, daß die Klingen (22) aus rostfreiem Stahl bestehen und konstanten Querschnitt aufweisen.

22. Vorrichtung nach einem der Ansprüche 19 oder 21, dadurch gekennezeichnet, daß die bewegliche Klingen aufweisende Abreibeinrichtung mit wenigstens einem vibrierenden Element mit wenigstens einer Klinge (83) ausgerüstet ist, bei der oder den Klingen eine Hin- und Herbewegung in der Vorschubrichtung der zu reinigenden Folie auslöst.

23. Vorrichtung nach einem der Ansprüche 9 bis 22, dadurch gekennzeichnet, daß sie zwei Arten von Abreibeinrichtungen aufweist: eine mit feststehender Klinge und eine mit beweglicher Klinge.

24. Vorrichtung nach einem der Ansprüche 9 bis 23, dadurch gekennzeichnet, daß jede Abreibeinrichtung an eine Absaugquelle für die freigesetzten Partikel und Staubteilchen angeschlossen ist.

25. Vorrichtung nach Anspruch 24, dadurch gekennzeichnet, daß die Abreibeinrichtungen mit fester Klinge stromaufwärts von der Klinge (57) eine Absaugdüse (59) aufweisen, die eine Bohrung (60) auf einem über dem niedrigsten Niveau (62) der Bohrung liegenden höheren Niveau (61) ausmündet, so daß die angesaugten Partikel nicht auf die gebürstete Folie zurückfallen.

26. Vorrichtung nach einem der Ansprüche 9 bis 25, dadurch gekennzeichnet, daß jede Abwischeinrichtung eine Absaugdüse für freigesetzte Partikel und Staubteilchen aufweist.

27. Vorrichtung nach einem der Ansprüche 9 bis 26, dadurch gekennzeichnet, daß sie antistatische Schienen (5) aufweist, und an wenigstens einer Seite der Folie in Folienlaufrichtung der Folie in dieser Reihenfolge Abwischeinrichtungen (7, 8), Abreibeinrichtungen (21, 22), Abwischeinrichtungen (36, 37) aus Nylonsamt und eine antistatische Schiene (5) vorgesehen sind.

28. Vorrichtung nach Anspruch 27, dadurch gekennzeichnet, daß die Abreibeinrichtungen auf wenigstens einer Seite der Folie und in Folienlaufrichtung in dieser Reihenfolge aufweisen: ein Element mit feststehender Klinge (11), in Element mit beweglichen Klingen (21, 74), ein zweites Element mit fester Klinge (32), wobei die Klingendicke geringer als die beim ersten Element ist.

29. Vorrichtung nach einem der Ansprüche 9 bis 28, dadurch gekennzeichnet, daß die feste Klingen (12; 33) stromabwärts dieser Vorrichtung geneigt sind.

30. Vorrichtung nach einem der Ansprüche 9 bis 29, dadurch gekennzeichnet, daß sich die Vorrichtung in einem Raum mit Filterwänden befindet.

31. Vorrichtung nach einem der Ansprüche 9 bis 30, dadurch gekennzeichnet, daß sich die Vorrichtung in einem Raum befindet, in dem die Atmosphäre unter überdruck steht.

32. Vorrichtung nach einem der Ansprüche 9 bis 31, dadurch gekennzeichnet, daß sich die Vorrichtung in einem Raum befindet, dessen Temperatur bei ca. 20 bis 25°C liegt.

33. Vorrichtung nach einem der Ansprüche 9 bis 32, dadurch gekennzeichnet, daß sich die Vorrichtung in einem Raum befindet, dessen relative Luftfeuchtigkeit bei etwa 60% liegt.

34. Vorrichtung nach einem der Ansprüche 9 bis 33, dadurch gekennzeichnet, daß sich die Vorrichtung gerade stromaufwärts der Zone des Zusammenbaus von Folienverglasungen befindet.

**Claims**

1. Method of cleaning a sheet of plastics materials during continuous relative displacement of the sheet, comprising the following operations:

— static electricity is discharged from the sheet;
— at least one of the two surfaces of the sheet is swept;
— the particles or dust which have been liberated are aspirated, characterised in that in addition to the sweeping at least one of the two surfaces is scraped over the whole width of the sheet by at least one contact following a line.

2. Method according to claim 1, characterised in that static electricity is discharged from the sheet during all the operations of sweeping and scraping by ionisation of the air around the sheet.

3. Method according to claim 1 or 2, characterised in that the particles or dust are aspirated at the same time as the sweeping and the scraping.

4. Method according to one of claims 1 to 3, characterized in that the cleaning operations comprise the following sequence:

— sweeping for a first time, at the same time as the particles or dust liberated are aspirated;
— scraping, at least once, at least one of the two surfaces at the same time as the particles or dust liberated are aspirated;
— sweeping for a last time, at the same time as the particles or dust liberated are aspirated, discharge of static electricity from the sheet being maintained during all these operations.

5. Method according to one of claims 1 to 3, characterised in that at least one surface of the sheet is scraped a plurality of times combining a static scraping using at least one blade fixed with respect to the sheet which is displaced with a dynamic scraping using at least one blade which is movable along the direction of displacement of the sheet.

6. Method according to one of claims 1 to 5, characterised in that it is applied to a transparent or translucid sheet of plastics materials having high optical properties of which one surface comprises essentially a thermoplastic material whereas the other surface comprises essentially a thermohardening material.

7. Method according to claim 6, characterised in that the scraping operation is carried out only on the surface comprising essentially a thermoplastic material.

8. Method according to one of claims 1 to 7, characterised in that it is applied to a sheet the temperature of which is about 20 to 40°.

9. Device for cleaning a sheet (1) of plastics materials during continuous relative displacement of the sheet, comprising:

— a conveyor (14) for transporting the sheet to be cleaned;
— means (5) for discharging static electricity from the sheet;
— means (7, 8, 36, 37) for sweeping at least one surface of the sheet;
— means (13, 39) for aspirating the particles and dust liberated to remove them from the sheet;

characterised in that it comprises means (21, 32) for scraping at least one surface of the sheet, these means defining at least one contact following a line with the sheet to be cleaned and extending over the whole width of the sheet.

10. Device according to claim 9, characterised in that the means for discharging static electricity from the sheet are antistatic bars (5).

11. Device according to one of claims 9 or 10, characterised in that the means for sweeping the glass are provided with a nonwoven paper (9).

12. Device according to claim 11, characterised in that the non-woven paper (9) is Vileda.

13. Device according to one of claims 9 to 10, characterised in that the means for sweeping the sheet comprise a fluffless tissue (38).

14. Device according to claim 13, characterised in that the fluffless tissue (38) is Nylon velvet having an oriented pile.

15. Device according to claim 14, characterised in that the Nylon velvet is mounted so as to present the pile (103) oriented in the direction reverse to the motion of the sheet.

16. Device according to one of claims 9 to 15, characterised in that it comprises means for sweeping provided with a non-woven paper (9) and means for sweeping provided with a fluffless tissue (38).

17. Device according to claim 16, characterised in that it comprises means for sweeping

**0 006 824**

provided with Vileda and means for sweeping provided with Nylon velvet, the last means for sweeping being provided with Nylon velvet.

18. Device according to one of claims 9 to 17, characterised in that the scraping means (32) comprise a fixed blade, preferably of stainless steel.

19. Device according to one of claims 9 to 18, characterised in that the scraping means (21) comprise at least one movable blade.

20. Device according to claim 19, characterised in that the scraping means having movable blades are essentially a rotatable drum (21) provided at its periphery with a plurality of blades (22).

21. Device according to one of claims 19 or 20, characterised in that the blades (22) are of stainless steel and their cross-section is constant.

22. Device according to one of claims 19 or 20, characterised in that the scraping means having a movable blade comprises at least one vibrating element provided with at least one blade (83) causing to and fro movement of said blade or blades in the direction of displacement of the sheet to be cleaned.

23. Device according to one of claims 9 to 22, characterised in that it comprises scraping means of two types: having a fixed blade and having a movable blade.

24. Device according to one of claims 9 to 23, characterised in that each of the scraping means is connected to an aspiration source for the particles and dust liberated.

25. Device according to claim 24, characterised in that the scraping means having a fixed blade having upstream of the blade (57) an aspiration nozzle (59) which opens into a bore (60) at a level above (61) the lowest level (62) of said bore, so that the aspirated particles do not fall back on to the scraped sheet.

26. Device according to one of claims 9 to 25, characterised in that each of the sweeping means is provided with an aspiration nozzle for the particles and dust liberated.

27. Device according to one of claims 9 to 26, characterised in that it comprises antistatic bars (5) and, in order, on at least one side of the sheet in the direction of motion of the sheet, sweeping means (7, 8), scraping means (21, 32), sweeping means (36, 37) provided with Nylon velvet, and an antistatic bar (5).

28. Device according to claim 27, characterised in that the scraping means are, in order, on at least one side of the sheet in the direction of motion of the sheet: a fixed blade element (11), and a movable blades element (21, 74) a second fixed blade element (32) having a blade thickness less than that of the first element.

29. Device according to one of claims 9 to 28, characterised in that the fixed blades (12, 33) are inclined downstream with respect to said device.

30. Device according to one of claims 9 to 29, characterised in that it is situated in a location having filtering walls.

31. Device according to one of claims 9 to 30, characterised in that it is situated in a location within which the atmosphere is at increased pressure.

32. Device according to one of claims 9 to 31, characterised in that it is situated in a location within which the temperature is about 20—25°C.

33. Device according to one of claims 9 to 32, characterised in that it is situated in a location in which the relative humidity of the air is about 60%.

34. Device according to one of claims 9 to 33, characterised in that it is placed immediately upstream of the assembly zone for laminated panes.

Fig.1

Fig.2

Fig. 3

Fig 5

Fig 6

Fig. 4

2

Fig. 7

0 006 824

**0 006 824**

## Fig. 8

## Fig.9

Fig. 10

Fig . 11

Fig. 12

Fig. 13